# EUROPÄISCHE PATENTSCHRIFT

(11) **EP 0 711 468 B1**
(45) Veröffentlichungstag und Bekanntmachung des Hinweises auf die Patenterteilung: **08.01.1997**
(21) Anmeldenummer: 94924259.8
(22) Anmeldetag: 18.07.1994
(51) Int. Cl.: H02K 1/27, H02K 11/00, G01P 1/04, F16D 1/06, F16B 21/20, F16C 35/06

(54) **ELEKTROMOTORISCHER ANTRIEB**
ELECTROMOTIVE DRIVE
ENTRAINEMENT PAR MOTEUR ELECTRIQUE

(30) Priorität: 30.07.1993 EP 93112276; 07.10.1993 DE 9315586 U
(43) Veröffentlichungstag der Anmeldung: 15.05.1996
(73) Patentinhaber: SIEMENS AKTIENGESELLSCHAFT, 80333 München (DE)
(72) Erfinder: BORMANN, Jürgen, D-97228 Rottendorf (DE)
(86) Internationale Anmeldenummer: EP9402362
(87) Internationale Veröffentlichungsnummer: WO9504398

(56) Entgegenhaltungen:
- CH-A- 568 679
- GB-A- 766 195
- GB-A- 2 067 359
- US-A- 3 367 687
- US-A- 5 155 401
- PATENT ABSTRACTS OF JAPAN vol. 016, no. 497 (E-1279) 14. Oktober 1992 & JP,A,04 183 245 (MATSUSHITA) 30. Juni 1992
- PATENT ABSTRACTS OF JAPAN vol. 11, no. 283 (P-615) 12. September 1987 & JP,A,62 080 616 (KOMURASAKI) 14. April 1987
- PATENT ABSTRACTS OF JAPAN vol. 5, no. 63 (E-54) (735) 28. April 1981 & JP,A,56 012 848 (CITIZEN) 7. Februar 1981
- PATENT ABSTRACTS OF JAPAN vol. 012, no. 249 (P-730) 14. Juli 1988 & JP,A,63 040 813 (NEC HOME ELECTRONICS) 22. Februar 1988

## Beschreibung

Die Erfindung bezieht sich auf einen elektromotorischen Antrieb gemäß Anspruch 1; derartige Antriebe mit einem auf der Rotorwelle befestigten Polrad als Magnetkörper zur Erzeugung eines drehzahlproportionalen Signals in einer statorseitigen Hallsondenvorrichtung sind z.B. zum Einsatz für drehzahlgesteuerte bzw. drehrichtungsgesteuerte Fensterheberantriebe in Kraftfahrzeugen oder für Waschautomatenantriebe vorgesehen.

Durch die JP-A-04 183 245 ist ein elektromotorischer Antrieb mit auf einer Rotorwelle gehaltenem Magnetkörper bekannt, der mit einer entsprechenden Rotorwellenöffnung auf die Rotorwelle mit radialem Spiel aufgesteckt ist und ansonsten dadurch gehalten und bei Rotation der Rotorwelle mitgenommen wird, daß in axiale Ausnehmungen an seiner einen Stirnseite korrespondierende angepaßte axial vorstehende feste Nasen eines auf die Rotorwelle aufgedruckten Knopfes eingepaßt werden.

Durch die EP-A1-0 489 940 ist ein Kommutatormotor bekannt, bei dem zur Drehzahlregelung auf einer statorseitigen Elektronik-Anschlußplatte Hallsonden angeordnet sind, denen ein unmittelbar auf der Rotorwelle befestiges Polrad zugeordnet ist. Die Befestigung des Polrades auf der Rotorwelle kann z.B. durch einen entsprechenden Preßsitz und/oder Klebesitz erfolgen.

Durch die DE-U1-90 06 935 ist ein elektromotorischer Antrieb, insbesondere für ein Kraftfahrzeug, mit einem Kommutator und einem zur Drehzahl- und/oder Drehrichtungserfassung auf der Rotorwelle angeordneten, mit einem statorseitigen Hallsensor zusammenwirkenden magnetischen Polrad bekannt, wobei zur Halterung des Polrades auf der Rotorwelle zunächst eine Distanzbuchse auf die Rotorwelle drehfest aufgesetzt ist und dann das Polrad konzentrisch zur Distanzbuchse auf dessen Außenumfang entweder aufgepreßt oder aufgesteckt bzw. aufgeklebt oder mit Formschluß befestigt ist; zur Formschluß-Befestigung ist die Distanzbuchse am Außenumfang mit einer Abflachung einerseits und das Polrad an der korrespondierenden Innenseite mit einer entsprechenden Abflachung andererseits versehen. Zur axialen Fixierung liegt die Distanzbuchse mit ihrer einen Stirnseite am Kommutator an und ist an ihrer anderen Stirnseite mit Hilfe eines formschlüssig in die Rotorwelle einsetzbaren Sicherungsringes festgelegt. Das magnetische Polrad kann aus einem Kunststoffkörper mit kunststoffgebundenen Magnet-Partikeln oder aus einem nichtmagnetischen Grundkörper bestehen, in den Permanentmagnete eingesetzt sind.

Der Erfindung liegt die Aufgabe zugrunde, für einen Magnetkörper vorzugsweise hoher Polzahl bei kleiner Einbaugröße mit einfachen Mitteln eine auch bei längerem und hartem Betriebseinsatz sowie größerem Wärmespiel sichere Fixierung auf der Rotorwelle gewährleisten zu können. Die Lösung dieser Aufgabe gelingt durch die Lehre des Anspruchs 1; vorteilhafte Ausgestaltungen der Erfindung sind jeweils Gegenstand der Unteransprüche.

Beim erfindungsgemäßen elektromotorischen Antrieb ist es möglich, ohne Rücksicht auf die Sprödigkeit des Magnetkörpers und aufgrund dessen Kunststoffanteils, insbesondere beim Einsatz in Waschautomaten, gegebenem großem Wärmespiel relativ zur aufnehmenden, aus Stahl gefertigten Rotorwelle eine sichere Fixierung dieses Magnetkörpers bei gleichzeitig einfacher, zum Einsatz von Manipulatoren geeigneter Montagemöglichkeit zu gewährleisten, wobei die gesamte Umfangsfläche des Magnetkörpers für eine Aufmagnetisierung im Sinne einer dichten Polfolge und somit hohen Polzahl zur Verfügung steht.

Bei der Montage des Magnetkörpers sowie des Andruckteils ist zweckmäßigerweise der Magnetkörper lediglich im Schiebesitz auf die Rotorwelle aufgesteckt und das Andruckteil im Fest- bzw. Preßsitz auf die Rotorwelle, insbesondere von einem freien Wellenende der Rotorwelle her, aufgedrückt; als Anschlag für die axiale Endfixierung des durch das Andruckteil axial aufgedruckten Magnetkörpers dient nach einer Ausgestaltung der Erfindung eine Wellenschulter an der dem Andruckteil abgewandten Stirnseite des Magnetkörpers.

Als elastisches Andruckteil ist in vorteilhafter Weise eine Andruckscheibe mit einer radial inneren Preßsitzaufnahme für die Rotorwelle und mit axial gegen den Magentkörper vorstehenden elastischen Andruckfingern vorgesehen, derart daß im Normalfall eine Drehmitnahme des Magnetkörpers ohne Schlupf relativ zur Rotorwelle durch kraftschlüssige Anlage des auf der Rotorwelle fixierten Andruckteils gewährleistet ist. Zur zusätzlichen Sicherung einer schlupffreien Drehmitnahme sind an dem Magnetkörper zu den Andruckfingern des Andruckteils korrespondierende Einrastvertiefungen vorgesehen, derart daß bei einem erstmaligen Schlupf zwischen dem Andruckteil einerseits und dem Magnetkörper andererseits die Andruckfinger in die Einrastvertiefungen einschnappen und dann für sämtliche weitere Betriebszustände eine zusätzliche formschlüssige Drehmitnahme zwischen Magnetkörper und Andruckteil gewährleistet ist.

In fertigungs- und montagetechnisch vorteilhafter Weise besteht das Andruckteil, insbesondere die Andruckscheibe aus einem einstückigen Kunststoffteil mit einer radial inneren Preßsitzaufnahme und daran angeformten Andruckfingern; der Magnetkörper besteht üblicherweise aus einem Sintermagnetring bzw. einem kunststoffgebundenen Ferritmagnetring mit einer, vorzugsweise axial mittigen, Rotorwellen-Auflagefläche über nur ein Teil seiner axialen Länge.

Die Erfindung sowie weitere vorteilhafte Ausgestaltungen der Erfindung gemäß Merkmalen der Unteransprüche werden im Folgenden anhand schematisch dargestellter Ausführungsbeispiele in der Zeichnung näher erläutert; darin zeigen:
- FIG 1: in einem axialen Teilschnittbild eine Rotorwelle mit auf deren freiem Wellenende bis zur Anlage gegen eine Wellenschulter aufgeschobenem Magnetkörper und axial andrückender Andruckscheibe,
- FIG 2: die Andruckscheibe gemäß FIG 1 im nicht verspannten Vormontagezustand,
- FIG 3: die magnetkörperseitige axiale Draufsicht auf die Andruckscheibe gemäß FIG 2,
- FIG 4: die Anordnung gemäß FIG 1 im Teilausschnitt mit in stirnseitige Einrastvertiefungen des Magnet körpers eingeschnappten Andruckfingern der An druckscheibe,
- FIG 5: die axial stirnseitige Draufsicht auf eine der beiden Stirnseiten eines symmetrisch ausgebildeten Magnetkörpers.

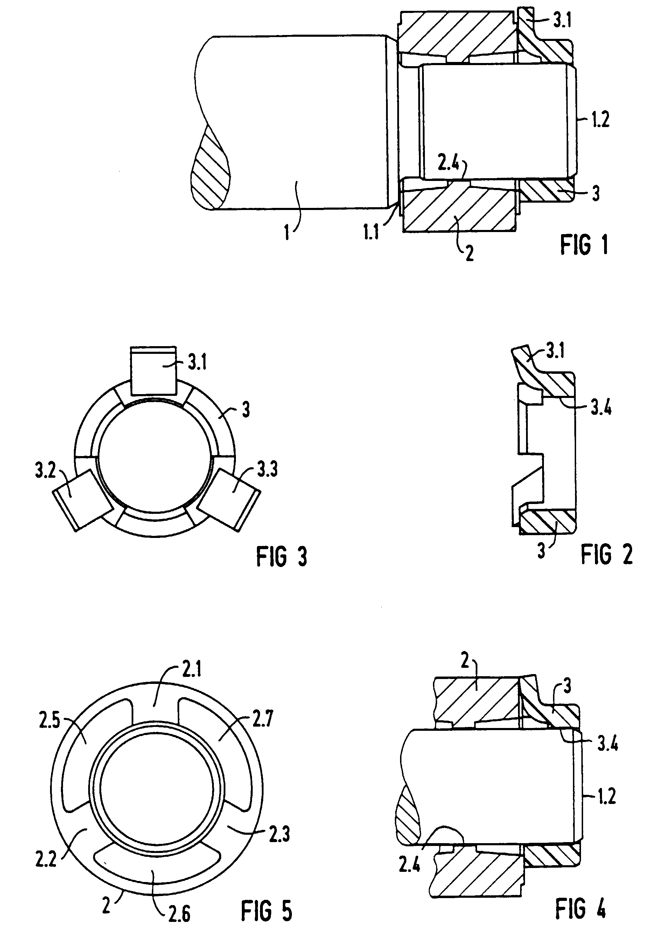

FIG 1 zeigt eine Rotorwelle 1 z.B. eines Waschautomatenantriebes, auf der durch eine Wellenschulter 1.1 radial abgesetzten freien Ende 1.2 ein Magnetkörper 2 drehfest gehaltert ist, der z.B. als Geber für eine Drehzahl- bzw. Drehrichtungsmeß- und/oder Regelvorrichtung dient. Der Magnetkörper 2 besteht zweckmäßigerweise aus einem Sintermagnetring bzw. einem kunststoffgebundenen Ferritmagnetring; derartige Magnetkörper sind im Fall einer Sinterung aufgrund ihrer Sprödigkeit zug- bzw. druckspannungsempfindlich oder bei verwendetem Kunststoffmaterial bei größeren Temperaturen einem Wärmespiel ausgesetzt, da der Kunststoff im Vergleich zur Rotorwelle einen wesentlich unterschiedlichen Wärmekoeffizienten aufweist.

Erfindungsgemäß ist daher der Magnetkörper 2 lediglich im Schiebesitz von der rechten Seite auf das freie Ende 1.2 der Rotorwelle 1 derart aufgeschoben, daß eine radiale Zentrierung gegeben ist. Zur schlupffreien Drehmitnahme des Magnetkörpers 2 mit der Rotorwelle 1 ist eine aus Kunststoff einstückig gespritzte Andruckscheibe 3 gegen die rechte Stirnseite des Magnetkörpers 2 angedrückt, der mit seiner linken Stirnseite in seiner betrieblichen Endlage dabei gegen eine Wellenschulter 1.1 der Rotorwelle 1 anliegt. In Abänderung der axialen Begrenzung durch die Wellenschulter 1.1 könnte auf eine nicht abgesetzte Rotorwelle 1 auch an der linken Stirnseite des Magnetkörpers 2 eine Andruckscheibe ähnlich der Andruckscheibe 3 an der rechten Stirnseite auf die Rotorwelle 1 zuvor aufgepreßt sein. In vorteilhafter Weise liegt der Magnetkörper 2 nicht mit seiner gesamten Bohrungsfläche, sondern nur mit einer axial verkürzten, vorzugsweise axial mittig angeordneten, Auflagefläche 2.4 auf dem freien Ende 1.2 der Rotorwelle 1 auf.

Die Andruckscheibe 3 weist gemäß FIG 2,3 gemäß einer vorteilhaften Ausgestaltung neben einer radial inneren Preßsitzaufnahme 3.4 für das freie Ende 1.2 der Rotorwelle 1 axial gegen die zum Andruck kommende Stirnseite des Magnetkörpers 2 vorstehende elastische Andruckfinger 3.1-3.3 auf. Zweckmäßigerweise sind die Andruckfinger 3.1-3.3 an ihren freien Enden radial abgebogen und drücken mit den radiale abgebogenen Enden elastisch gegen den Magnetkörper an; dadurch lassen sich bei konstantem elastischen Andruck auch axiale Toleranzen leicht ausgleichen.

Obwohl an sich eine schlupffreie Drehmitnahme zwischen der vorteilhaft mit elastischer Vorspannung an dem Magnetkörper 2 anliegenden Andruckscheibe 3 und dem Magnetkörper 2 gewährleistet werden kann, ist nach einer weiteren, aus FIG 2-4 ersichtlichen, Ausgestaltung der Erfindung eine zusätzliche formschlüssige Drehmitnahme zwischen der Andruckscheibe 3 einerseits und dem Magnetkörper 2 andererseits derart vorgesehen, daß die Stirnseite des Magnetkörpers 2 gemäß FIG 5 zu den Andruckflächen der elastischen Finger 3.1-3.3 korrespondierende Einrastvertiefungen 2.1-2.3 aufweist.

Liegen beim Aufstecken des Magnetkörpers 2 einerseits sowie der Andruckscheibe 3 anderseits die Einrastvertiefungen 2.1-2.3 des Magnetkörpers 2 nicht deckungsgleich axial vor den Andruckfingern 3.1-3.3 der Andruckscheibe 3, so ist zunächst eine kraftschlüssige Drehmitnahme zwischen dem Magnetkörper 2 und der Andruckscheibe 3 gegeben. In vorteilhafter Weise sind nach einer Ausgestaltung der Erfindung dazu die zwischen den Einrastvertiefungen 2.1-2.3 verbleibenden Anlageflächen 2.5-2.7 für die Andruckfinger 3.1-3.3 mit einer aufgerauhten Oberfläche versehen. Durch die Federwirkung der Andruckfinger 3.1-3.3 wird ein möglicherweise vorhandenes axiales Wärmespiel des Magnetkörpers 2 ausgeglichen; ein möglicherweise auch vorhandenes radiales Spiel des Magnetkörpers 2 wird ebenfalls in den Grenzen des Kraftschlusses der andrückenden Andruckscheibe 3 vermieden. Darüber hinaus können Schwingungen aufgrund der Reibung zwischen dem Magnetkörper 2 und der Andruckscheibe 3 gedämpft werden. Überschreitet die Rotationsbelastung des Magnetkörpers 2 die Grenzen des Kraftschlusses zwischen dem Magnetkörper 2 und der Andruckscheibe 3, kann sich der Magnetkörper 2 um einen geringen Tangentialwinkel relativ zur Rotorwelle 1 drehen, bis die Andruckfinger 3.1-3.3 in die Einrastvertiefungen 2.1-2.3 einschnappen und dadurch einen zusätzlichen Formschluß gewährleisten. Die Federkonstante der Andruckfinger 3.1-3.3 und die Formgebung der Einrastvertiefungen 2.1-2.3 sind derart aufeinander abgestimmt, daß die verbleibende Axial-Andruckkraft der Andruckfinger 3.1-3.3 größer als Null ist.

In fertigungs- und montagetechnisch einfacher Weise sind im Sinne eines axial symmetrischen Bauteils die Einrastvertiefung 2.1-2.3 sowie die Anlagenflächen 2.5-2.7 an beiden Stirnseiten des Magnetkörpers 2 vorgesehen. In ähnlicher Weise kann auch die Andruckscheibe 3 in Abänderung des dargestellten Ausführungsbeispiels axial beidseitig ihrer Preßsitzaufnahme 3.4 mit axial vorstehenden elastischen Andruckfingern 3.1-3.3 versehen sein.

## Patentansprüche

1. Elektromotorischer Antrieb, insbesondere Waschautomatenantrieb, mit auf einer Rotorwelle (1) konzentrisch gehaltenem Magnetkörper (2) mit den Merkmalen:
a) Der Magnetkörper (2) ist zur radialen Lagesicherung mit einer entsprechenden Rotorwellenöffnung auf die Rotorwelle (1) zentrierend, jedoch druck- bzw. zugspannungsfrei aufgesteckt;
b) Der Magnetkörper (2) ist zur axialen Lagesicherung bzw. tangentialen Drehmitnahme mit der Rotorwelle (1) durch ein auf dieser fixiertes Andruckteil (3) mit axial elastischer stirnseitiger Anlage gegen einen axialen Anschlag (1.1) gedrückt.

2. Elektromotorischer Antrieb nach Anspruch 1 mit dem Merkmal:
c) Der Magnetkörper (2) ist im Schiebesitz auf die Rotorwelle (1) aufgesteckt.

3. Elektromotorischer Antrieb nach Anspruch 1 oder 2 mit dem Merkmal:
d) Das Andruckteil (3) ist im Fest- bzw. Preßsitz auf die Rotorwelle (1), insbesondere von einem freien Wellenende (1.2) her, aufgedrückt.

4. Elektromotorischer Antrieb nach einem der Ansprüche 1-3 mit dem Merkmal:
e) Als Anschlag ist eine Wellenschulter (1.1) an der dem Andruckteil (3) abgewandten Stirnseite des Magnetkörpers (2) vorgesehen.

5. Elektromotorischer Antrieb nach einem der Ansprüche 1-4 mit dem Merkmal:
f) Als elastisches Andruckteil ist eine Andruckscheibe (3) mit einer radial inneren Preßsitzaufnahme (3.4) für die Rotorwelle (1) und mit axial gegen den Magnetkörper (2) vorstehenden elastischen Andruckfingern (3.1;3.2;3.3) vorgesehen.

6. Elektromotorischer Antrieb nach Anspruch 5 mit dem Merkmal:
g) Die Andruckfinger (3.1;3.2;3.3) sind an ihren freien Enden schräg radial abgebogen und drücken mit den abgebogenen Enden elastisch gegen den Magnetkörper (2) an.

7. Elektromotorischer Antrieb nach Anspruch 5 und/oder 6 mit dem Merkmal:
h) An dem Magnetkörper (2) sind im Sinne einer zusätzlichen formschlüssigen Drehmitnahme zu den Andruckfingern (3.1;3.2;3.3) korrespondierende stirnseitige Einrastvertiefungen (2.1;2.2;2.3) vorgesehen.

8. Elektromotorischer Antrieb nach Anspruch 7 mit dem Merkmal:
i) Die Anlageflächen (2.6;2.7;2.8) für die Andruckfinger (3.1-3.3) im Bereich zwischen den Einrastvertiefungen (2.1-2.3) sind mit einer aufgerauhten Berührungsfläche versehen.

9. Elektromotorischer Antrieb nach einem der Ansprüche 1-8 mit dem Merkmal:
j) Die Andruckscheibe (3) besteht aus einem einstückigen Kunststoffteil mit einer radial inneren Preßsitzaufnahme (3.4) und daran angeformten Andruckfingern (3.1-3.3).

10. Elektromotorischer Antrieb nach einem der Ansprüche 1-9 mit dem Merkmal:
k) Der Magnetkörper (2) besteht aus einem Sintermagnetring bzw. einem kunststoffgebundenen Ferritmagnetring mit einer, vorzugsweise axial mittigen, Rotorwellen-Auflagefläche (2.4) über nur einen Teil seiner axialen Länge.

## Claims

1. Electric motor drive, in particular an automatic washing machine drive, having a magnet body (2) which is held concentrically on a rotor shaft (1) and has the features:
a) the magnet body (2) is plugged in a centring manner, but such that it is free of compression and tension stresses, onto the rotor shaft (1) by means of an appropriate rotor shaft opening, in order to secure the position radially;
b) the magnet body (2) is pressed against an axial stop (1.1) by means of a contact pressure part (3), which is fixed on the rotor shaft (1) and makes axially elastic end contact against an axial stop (1.1), in order to secure the position axially and for tangential driving by the rotor shaft (1).

2. Electric motor drive according to Claim 1 having the feature:
c) the magnet body (2) is plugged onto the rotor shaft (1) with a sliding fit.

3. Electric motor drive according to Claim 1 or 2 having the feature:
d) the contact pressure part (3) is pushed onto the rotor shaft (1), in particular from a free shaft end (1.2), with an interference fit or push fit.

4. Electric motor drive according to one of Claims 1-3 having the feature:
e) a shaft shoulder (1.1) is provided as a stop on that end of the magnet body (2) which faces away from the contact pressure part (3).

5. Electric motor drive according to one of Claims 1-4 having the feature:
f) a contact pressure disc (3) is provided as elastic contact pressure part, having a radially inner push fit holder (3.4) for the rotor shaft (1) and having elastic contact pressure fingers (3.1;3.2;3.3) which project axially with respect to the magnet body (2).

6. Electric motor drive according to Claim 5 having the feature:
g) the contact pressure fingers (3.1;3.2;3.3) are bent radially in an inclined manner at their free ends, and their bent ends make elastic contact with the magnet body (2).

7. Electric motor drive according to Claim 5 and/or 6 having the feature:
h) end latching depressions (2.1;2.2;2.3), which correspond with the contact pressure fingers (3.1;3.2;3.3), are provided on the magnet body (2) for the purpose of providing additional positively locking driving.

8. Electric motor drive according to Claim 7 having the feature:
i) the contact surfaces (2.6;2.7;2.8) for the contact pressure fingers (3.1 - 3.3) are provided in the region between the latching depressions (2.1 - 2.3) with a roughened contact surface.

9. Electric motor drive according to one of Claims 1 - 8 having the feature:
j) the contact pressure disc (3) is composed of an integral plastic part having a radially inner push fit holder (3.4) and contact pressure fingers (3.1 - 3.3) integrally formed on it.

10. Electric motor drive according to one of Claims 1 - 9 having the feature:
k) the magnet body (2) is composed of a sintered magnetic ring or a plastic-bonded ferrite magnetic ring having a rotor shaft contact surface (2.4), which is preferably axially central, over only a part of its axial length.

## Revendications

1. Commande par moteur électrique, notamment commande pour machine à laver automatique, comportant un corps magnétique (2) maintenu, de manière concentrique, sur un arbre de rotor (1), ayant les particularités consistant en ce que :
a) le corps magnétique (2), pour un maintien en position radiale, est mis en place par une ouverture correspondant à l'arbre de rotor, de manière centrée, sur l'arbre de rotor (1), en étant toutefois exempt de contraintes de compression et de traction ;
b) le corps magnétique (2), pour un maintien en position axiale ou bien pour un entraînement tangentiel en rotation avec l'arbre de rotor (1), est pressé par un élément presseur (3), fixé sur celui-ci, et vient axialement en appui frontal élastique, contre une butée axiale (1.1).

2. Commande par moteur électrique selon la revendication 1, ayant la particularité consistant en ce que :
c) le corps magnétique (2) est monté à ajustement appuyé sur l'arbre de rotor (1).

3. Commande par moteur électrique selon la revendication 1 ou 2, ayant la particularité consistant en ce que :
d) l'élément presseur (3) est engagé, à ajustement serré ou avec serrage, sur l'arbre de rotor (1), et notamment à partir d'une extrémité libre (1.2) de l'arbre.

4. Commande par moteur électrique selon l'une des revendications 1 à 3, ayant la particularité consistant en ce que :
e) on prévoit, en tant que butée, un épaulement (1.1) de l'arbre du côté frontal du corps magnétique (2), éloigné de l'élément presseur (3).

5. Commande par moteur électrique selon l'une des revendications 1 à 4, ayant la particularité consistant en ce que :
f) on prévoit, en tant qu'élément presseur élastique, une rondelle de pression (3) comportant un logement radialement intérieur (3.4), à ajustement serré, pour l'arbre de rotor (1), et des doigts de pression (3.1 ; 3.2 ; 3.3) élastiques faisant saillie axialement contre le corps magnétique (2).

6. Commande par moteur électrique selon la revendication 5, ayant la particularité consistant en ce que :
g) les doigts de pression (3.1 ; 3.2 ; 3.3) sont courbés radialement en biais à leurs extrémités libres et pressent, par les extrémités courbées, élastiquement contre le corps magnétique (2).

7. Commande par moteur électrique selon la revendication 5 et/ou la revendication 6, ayant la particularité consistant en ce que :
h) on prévoit, sur une face frontale du corps magnétique (2), en vue d'un entraînement supplémentaire en rotation par complémentarité de formes , des renfoncements d'encliquetage (2.1 ; 2.2 ; 2.3) qui correspondent aux doigts de pression (3.1 ; 3.2 ; 3.3).

8. Commande par moteur électrique selon la revendication 7, ayant la particularité consistant en ce que :
i) les surfaces d'appui (2.6 ; 2.7 ; 2.8) pour les doigts de pression (3.1 à 3.3), situées dans la zone comprise entre les renfoncements d'encliquetage (2.1 à 2.3), présentent une surface de contact rendue rugueuse.

9. Commande par moteur électrique selon l'une des revendications 1 à 8, ayant la particularité consistant en ce que :
j) la rondelle de pression (3) est constituée d'un élément en matière plastique d'une seule pièce, avec logement radialement intérieur (3.4) à ajustement serré, duquel sont issus des doigts de pression (3.1 à 3.3).

10. Commande par moteur électrique selon l'une des revendications 1 à 9, ayant la particularité consistant en ce que :
k) le corps magnétique (2) est constitué d'un tore magnétique fritté ou bien en un tore magnétique en ferrite combiné à une matière plastique, ayant une surface d'appui (2.4) pour l'arbre de rotor, uniquement sur une partie de sa longueur axiale et située, de préférence, axialement au milieu.
